# EUROPEAN PATENT APPLICATION

(11) **EP 2 434 155 A2**
(43) Date of publication of application: **28.03.2012**
(21) Application number: 11182098.1
(22) Date of filing: 21.09.2011
(51) Int. Cl.: F03G 7/00

(54) **Electric generating device of training machine**

(30) Priority: 27.09.2010 TW 99218626
(71) Applicant: Peng, Huan Yao, Section 3, Yen Ping Road Hsin-Chu (CN)
(72) Inventor: Peng, Huan Yao, Section 3, Yen Ping Road Hsin-Chu (CN)
(74) Representative: Glawe, Delfs, Moll

(57) **Abstract**

The prevent invention is related to an electric generating device of a training machine, comprising an electric generator, a trestle, and an electrical storage device etc. Rotors and stators are symmetrically arranged at both the left side and right side of each electric generator (as shown in the second embodiment which extends to the first embodiment). The rotor and stator of each side is separately connected to the counterpoised rotor and stator of the other side through a rotor bushing and a bobbin. Each rotor has multiple permanent magnets whish are located on the inner surface and arrayed in circle. Each stator which has multiple sets of generator coil is inside the permanent magnets. The stators of both sides are connected to a control plate through a connecting wire. The control plate has series/parallel circuit and also has rectification circuit, voltage regulation circuit etc. The trestle with adjusting knob and the electrical storage device are installed outside of the electric generator.

Various kinds of training machine which is operated by hands or feet may imitate large or small torque in different exercise situation. By using a single circuit or choosing series circuit or parallel circuit, the electric power yielded at exercise can be stored in an electrical storage device and delivered at different voltages from 100V to 250V through a PCB to electric products.

## Description

The present invention is related to an electric generating device of training machine, especially related to an electric generating device which generates electric power by making a rotor bushing of an electric generator contact with a wheel tire and imitate large or small torque in different exercise situation; provides electric power stored in a electrical storage device to various electrical products; and effectively converts mechanical energy to electrical energy and then uses the electrical energy sufficiently.

Conventional electric generator of a bicycle is merely providing electric power for bicycle lighting system. The side wall of the wheel tire contacts an armature of the electric generator during the wheel rotates. Then the armature is carried to spin between the permanent magnets to produce electromagnetic induction which makes the armature yield an inductive current to illuminate bicycle light.

Moreover, during the bicycle riding the chain of a bicycle exerts linear displacement which brings a driving gear conjugated with the chain to circumrotate; then carries the electric generator to generate electric power. Further, the electric power may be stored in a storage unit for providing to an illuminating unit or exterior electrical products. According to the above structure, it seems that the system is adequately self-supplied but the electrical energy converted from mechanical energy in the system is only a small current which is not enough for high power products and lacks serviceability.

Considering the situation mentioned above, the inventor of the present invention invented an electric generating device of training machine. The training machine may be a stepper, an X-bike, a bicycle, a rowing machine, or a treadmill etc. and is operated by hands or feet of a user during doing indoor exercise. The user may choose to use a single generator or to use generators with series circuit or parallel circuit. The wheel tire of training machine contacts with a rotor bushing of an electric generator to do tangential rotation. The rotation further carries rotors of both sides to spin, and then the stators of both sides yield electric power. The electric power is transmitted to a control plate of the electric generator and charged into a battery through a PCB plate of an electrical storage device. The present invention may be employed in a large capacity electrical storage device and provides power supply to various electrical products and gains objects of fitness, power-saving, energy-saving, and carbon-reduction. The prevent invention of electric generating device of training machine comprises an electric generator, a trestle, and a electrical storage device etc. The electric generator is located in a cabinet and may be increased from one to two (as shown in the second embodiment which extends to the first embodiment). In the first embodiment inside the cabinet at left and right side there is provided respectively an electric generator. A rotor and a stator of one side are connected to symmetrized rotor and stator of the other side through a rotor bushing and a bobbin. The bobbin is encased in inner wall of a central hole of the rotor bushing. The rotor has bushing hole and has multiple permanent magnets located at inner wall and arrayed in circle. The stator which has multiple sets of generator coil is inside the permanent magnets. Axial hole of the stator is conjugated with the bobbin. The bobbin is fixed to magnetron plate through the axial hole, and the stator is fixed to magnetron plate through a stud. The stators of both ends are connected to a control plate by a wire. The control plate has series/parallel circuit and rectification, voltage regulation circuit etc. Outside of the electric generator there are provided trestle and electrical storage device etc. One end of propping tube of the trestle is fixed to the floor, and the other end is fixed to fixing tube. The electric generator is fixed by a magnetron plate fixing frame located inside of the fixing tube. An electrical storage device which is movable and has a sachet and a switch, is located beside the electric generator. The electrical storage device has a battery and a PCB plate inside so that it is available for a user to choose different voltages such as 100V/110V or 220V/250V.
FIG. 1 is a diagram demonstrating the structure of the electric generating device of a training machine of the first embodiment;
FIG. 2 is a diagram demonstrating the disposition of an electric generator suite, and a trestle, and an electrical storage device of the first embodiment;
FIG. 3 is a diagram demonstrating the disassembled view of an electric generator suite, and a trestle, and an electrical storage device of the first embodiment;
FIG. 4 is a diagram demonstrating the assembled view of an electric generator of the first embodiment;
FIG. 5 is a diagram demonstrating the disassembled view of an electric generator of the first embodiment;
FIG. 6 is a diagram demonstrating the structure of the electric generating device of a training machine of the second embodiment;
FIG. 7 is a diagram demonstrating the assembled view of an electric generator, and a trestle, and an electrical storage device of the second embodiment;
FIG. 8 is a diagram demonstrating the disassembled view of an electric generator, and a trestle, and an electrical storage device of the second embodiment.
1. The selected representative drawing in this invention is FIG. 3.
2. Brief description of the elements presenting in FIG. 3:

| | |
|---|---|
| 2......electric generator | 3.....trestle |
| 4......electrical storage device | 11......rotor |
| 12......bushing hole | 13......permanent magnet |
| 14......stator | 15......axial hole |
| 16......magnetron plate | 17......stud |
| 18......control plate | 19......bobbin |
| 20......rotor bushing | 22......screw-nut |
| 23......shaft bearing | 24......U-shape slot |
| 25......charging wire | 30......fixing tube |
| 31......propping tube | 32.....bolt hole |
| 33......magnetron plate fixing frame | 34......central edge |
| 35.....adjusting knob | 36......overshoe |
| 40......Switch | |
| 41.....electrical storage device cabinet | |
| 43......PCB plate | 45......battery |

The First Embodiment:

| | |
|---|---|
| 2......electric generator | 3......trestle |
| 4.....electrical storage device | 5......tire |
| 11......rotor | 12......bushing hole |
| 13......permanent magnet | 14......stator |
| 15......axial hole | 16......magnetron plate |
| 17......stud | 18......control plate |
| 19......bobbin | 20......rotor bushing |
| 21......cabinet | 22......screw-nut |
| 23......shaft bearing | 24......U-shape slot |
| 25......charging wire | 30......fixing tube |
| 31......propping tube | 32......bolt hole |
| 33......magnetron plate fixing frame | 34......central edge |
| 35......adjusting knob | 36......overshoe |
| 40......switch | |
| 41......electrical storage device cabinet | |
| 43......PCB plate | 45......battery |

The Second Embodiment:

| | |
|---|---|
| 50......electric generator | 51......Rotor |
| 52......stator | 53......rotor bushing |
| 54.....bobbin | 55......magnetron bed |
| 56......screw | 57......cabinet |
| 58......bush | 59.....charging wire |
| 60......U-shape slot | 61......control plate |
| 62......shaft bearing | 71......trestle |
| 72......main frame | |

In order to explain the technique of the present invention clearly and completely, two embodiments according to the present invention will now be described in reference to the drawings, like numerals referring to likes parts throughout the drawings.

### The first embodiment:

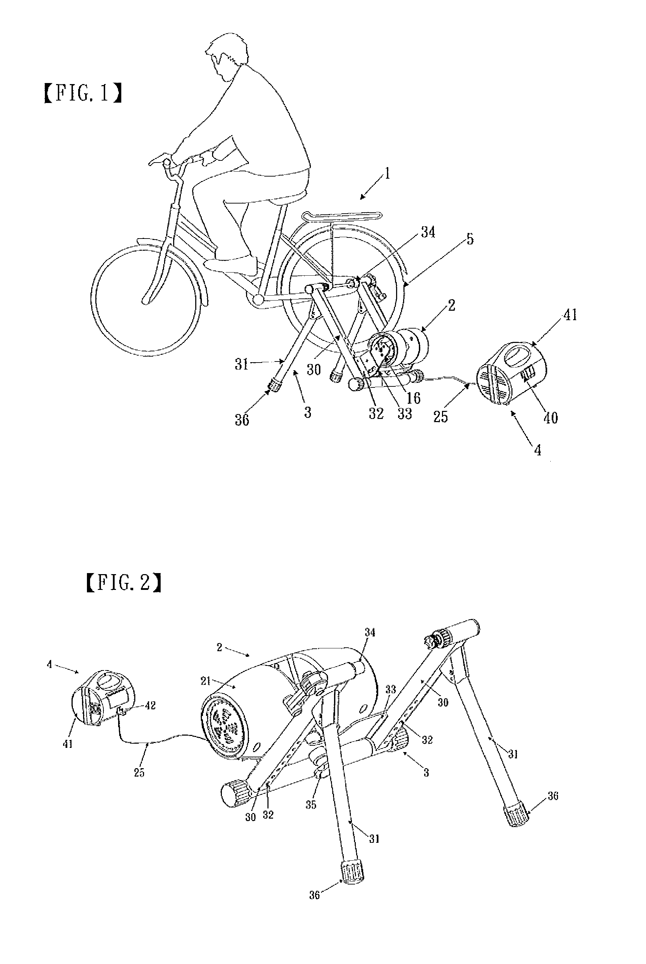

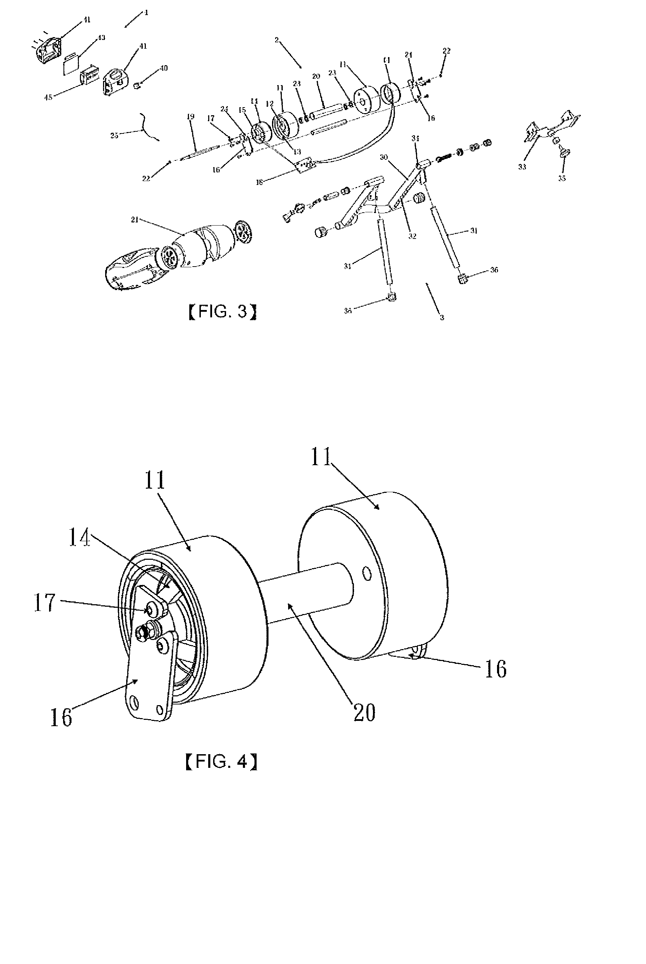

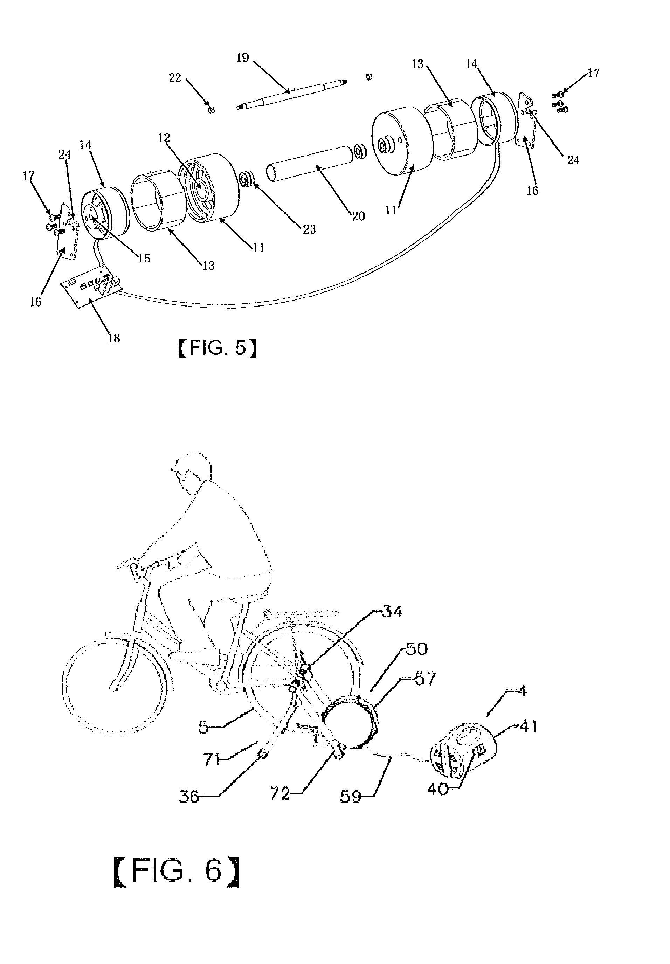

Referring now to FIG. 1 and FIG. 2, and FIG. 3, there is illustrating an electric generating device of training machine. An electric generator suite (2) (refer to FIG. 4 and FIG. 5) has a cabinet (21) outside, and inside separately has one electric generator at left and right side. Both the electric generators can be used simultaneously in series/parallel. A rotor (11), and a stator (14) of an electric generator at one side are connected to symmetrized rotor (11) and stator (14) of an electric generator at the other side through a rotor bushing (20) and a bobbin (19).

The rotor (11) has a bushing hole (12) inside. The counterpoised bushing holes (12) of both sides are connected by the rotor bushing (20) and shaft bearing (23), and the bobbin (19) is encased in the central hole of the rotor bushing (20). The rotor (11) has multiple permanent magnets (13) located at inner wall surface and arrayed in circle.

The stator (14) which has several sets of generator coil is inside the permanent magnets (13). A magnetron plate (16) is located outside of the stator (14) and has several studs (17). Axial hole (15) of the stator (14) is conjugated with the bobbin (19) which has screw-nut (22) at both ends for fixation. Two ends of the bobbin (19) are mounted on U-shape slot (24) of each magnetron plate (16) at both sides.

At one side the magnetron plate (16) has a control plate (18) which has rectification and voltage regulation function to supply stable current output after rectification.

The symmetrical stators (14) of both sides are connected to a control plate (18) through the connecting wire. The control plate (18) has series/parallel circuit and rectification, voltage regulation circuit etc. The control plate (18) also has a charging wire (25).

A trestle (3) which has a fixing tube (30) and a propping tube (31) is located outside of the electric generator suite (2). The fixing tube (30) has multiple bolt holes (32) at both sides and a magnetron plate fixing frame (33) at middle. The midpoint of the magnetron plate fixing frame (33) has an adjusting knob (35). The electric generator suite (2) is fixed on both upper sides of the magnetron plate fixing frame (33). The lateral side of the magnetron plate fixing frame (33) is fixed to the fixing tube (30) by conjugating with the bolt holes (32) of the fixing tube (30). The central edge (34) of the trestle is fixed at the position of central edge of the training machine. One end of the propping tube (31) is fixed on the floor through an overshoe (36), and the other end is fixed to the fixing tube (30). According to the structure mentioned above, to meet the size of wheel tire (5), the user can adjust the position of the magnetron plate fixing frame (33) by moving and fixing it at different bolt holes (32) of the fixing tube (30); and then slightly adjust the contact resistance of the wheel tire (5) by using the adjusting knob (35). An electrical storage device (4) which has a sachet (42) and a switch (40) is movable and is located beside the electric generator to provide users to choose different voltages such as 100V/110V or 220V/250V. The electrical storage device has a PCB plate (43) and a battery (45) inside, and has been assembled and fixed by screw and electrical storage device cabinet (41) outside.

### The second embodiment:

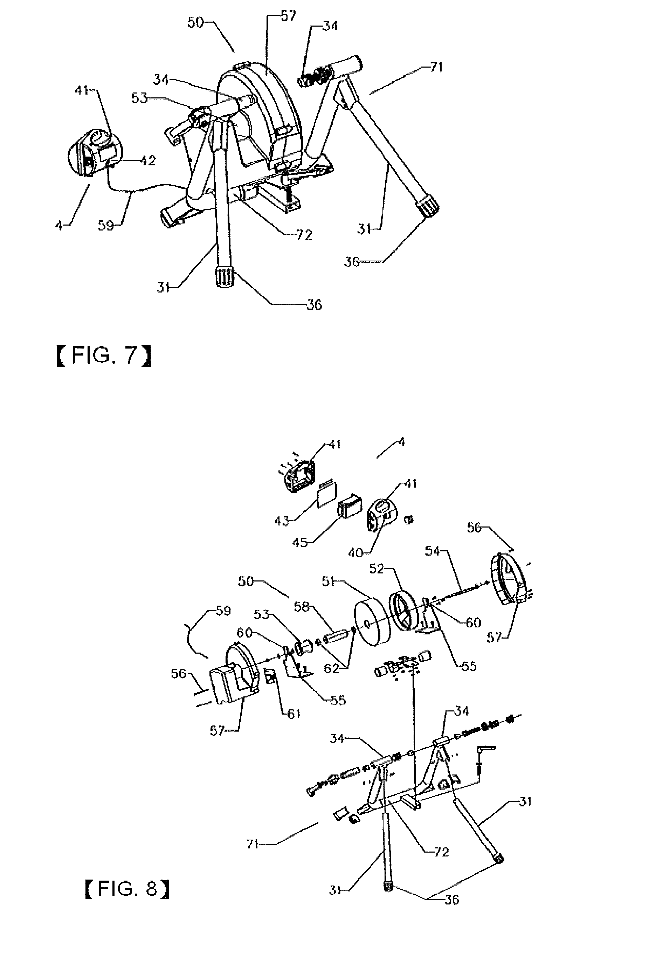

Referring now to FIG. 6 and FIG. 7, and FIG .8, the structure of the electric generating device of training machine of the present invention is analogous to the first embodiment except that two electric generators of the electric generator suite (2) in the first embodiment is changed to one electric generator (50). The electric generator (50) (refer to FIG. 8) has multiple permanent magnets as rotors (51), and the stator (52) which has several sets of generator coil is inside the permanent magnets (51). A bush (58) is connected to the central hole of the rotor (51), and a rotor bushing (53) is encased on outside of the bush (58). The bush (58) has pass holes inside; shaft bearing (62) is installed at pass holes of two ends separately. A bobbin (54) goes in the center of the bush (58) and both ends of the bobbin (54) are mounted on U-shape slot (60) of the magnetron bed (55) and fixed. The lateral side of the magnetron bed (55) has a control plate (61) which has rectification and voltage regulation function to deliver stable current after rectification. The control plate (61) also has a charging wire (59). Exterior part of the electric generator (50) is assembled and fixed by screw (56) and a cabinet (57).

A trestle (71) has a main frame (72) and a propping tube (31). The main frame (72) is used to fix the electric generator (50). The central edge (34) of the trestle is fixed at the bobbin position of the wheel center. As described in the first embodiment, an electrical storage device (4) is located beside the electric generator (50).

The training machine of the first embodiment and the second embodiment mentioned above may be a stepper, an X-bike, a bicycle, a rowing machine, or a treadmill etc. and is operated by hands or feet of a user during doing indoor exercise. The users of the training machine may choose either the mode of the first embodiment e.g. series circuit/parallel circuit or the mode of the second embodiment. By pedaling with feet or hand, the wheel tire (5) contacts with a rotor bushing (20)(53) of the electric generators (2)(50) to do tangential rotation. The rotation further carries rotors (11)(51) to spin, and then the stators (19)(52) yield electric power. The electric power is transmitted to a control plate (18) of the electric generator (2)(50) and charged into a battery (45) through a PCB plate (43) of a electrical storage device (4) after rectification and voltage regulation; or the electric power may be also employed to a large capacity electrical storage device(4) for charging. Thus the capability of the electric generators (2)(50) may maximize.

Consequently, the training machine of the present invention provides body fitness for the users, at meantime also yields electric power during using the training machine indoor. The electric power yielded by the electric generators (2)(50) may be transmitted to the electrical storage device (4) to be stored. The most important characteristic of this electric generating device would be simulating large or small torque of the training machine, and then causing electric generating and charging. The electric power stored in the battery (45) of the electrical storage device (4) is output through a PCB plate (43) as a power source for electric products (may provide various voltages e.g. 100V∼250V). Briefly the present invention not only enhances the effectiveness of an indoor training machine, but also gains objects of fitness, power-saving, energy-saving, and carbon-reduction.

The intention of the present invention is to provide an electric generating device of a training machine. Having illustrated and described the principles of my invention by what are presently preferred embodiments, it should be apparent to those persons skilled in the art that the illustrated embodiment may be modified without departing from such principles.

While a preferred embodiment of the device, together with alternate embodiments of the device, have been shown and described, it will be understood that there is no intent to limit the invention by its disclosure, but rather it is intended to cover all modifications and alternate constructions falling within the spirit and the scope of the invention as defined in the appended claims.

## Claims

1. An electric generating device of a training machine, comprising:
an electric generator suite which has a cabinet outside, and inside separately has one electric generator at left and right side; a rotor and a stator of an electric generator at one side are connected to symmetric rotor and stator of an electric generator at the other side through a rotor bushing and a bobbin; the rotor has a bushing hole inside; the counterpoised bushing holes of both sides are connected by the rotor bushing and a shaft bearing; the bobbin is encased in the central hole of the rotor bushing; the rotor has multiple permanent magnets located at inner wall surface and arrayed in circle; the stator which has several sets of generator coil is inside the permanent magnets; a magnetron plate is located outside of the stator and has several studs; axial hole of the stator is conjugated with the bobbin which has screw-nut at both ends for fixation;
a trestle which has a propping tube and a fixing tube for fixing the electric generator; the fixing tube has multiple bolt holes at both sides and a magnetron plate fixing frame at middle; the central edge of the trestle is fixed at the position of central edge of the training machine; one end of the propping tube is fixed on the floor through an overshoe, and the other end is fixed to the fixing tube;
an electrical storage device which is located beside the electric generator, is movable and has sachet and switch; and is available for a user to choose voltage of 100V/110V or 220V/250V.

2. An electric generating device of a training machine as defined in claim 1, wherein two ends of the bobbin are mounted on U-shape slot of each magnetron plate at both sides; the magnetron plate at one side has a control plate to supply stable current output after rectification.

3. An electric generating device of a training machine as defined in claim 1, wherein the symmetrical stators of the electric generator are connected to a control plate by a wire; the control plate has series/parallel circuit, and rectification, voltage regulation circuit, and a charging wire.

4. An electric generating device of a training machine as defined in claim 1, wherein the midpoint of the magnetron plate fixing frame has an adjusting knob; the electric generator suite is fixed on both upper sides of the magnetron plate fixing frame; the lateral side of the magnetron plate fixing frame is fixed to the fixing tube by conjugating with the bolt holes of the fixing tube.

5. An electric generating device of a training machine as defined in claim 1, wherein the electrical storage device has a PCB plate and a battery inside, and is assembled and fixed by screw and an electrical storage device cabinet outside.

6. An electric generating device of a training machine as defined in claim 1, wherein left side and right side of the electric generating suite connect to an electric generator separately, two electric generators can be used in series or in parallel.

7. An electric generating device of a training machine, comprising:
an electric generator which has multiple permanent magnets as rotor; the stator which has several sets of generator coil is inside the permanent magnets; the rotor connects to a bush; the bush is encased by a rotor bushing outside, and has a bobbin inside; two ends of the bobbin are mounted on U-shape slot at both sides of a magnetron bed; the electric generator is assembled and fixed by screw and a cabinet outside.
a trestle which has a main frame and a propping tube; the main frame is for fixing the electric generator; the central edge of the trestle is fixed at the bobbin position of center of the wheel.
an electrical storage device which is located beside the electric generator.

8. An electric generating device of a training machine as defined in claim 7, wherein the lateral side of the magnetron bed has a control plate which has rectification, and voltage regulation function to supply stable current after rectification; the control plate has a charging wire.

9. An electric generating device of a training machine as defined in claim 7, wherein the bush of the electric generator has pass holes inside; a shaft bearing is installed at pass holes of two ends separately.

10. An electric generating device of a training machine as defined in claim 1 and claim 7, wherein the rotor bushing contacts with the tire to do tangential rotation; the rotation further carries rotors to spin, and then the stators yield electric power.
